# FASCICULE DE BREVET EUROPEEN

(11) **EP 1 349 760 B1**
(45) Date de publication et mention de la délivrance du brevet: **05.03.2008**
(21) Numéro de dépôt: 01999498.7
(22) Date de dépôt: 03.12.2001
(51) Int. Cl.: B60T 11/232

(54) **PISTON DE MAITRE-CYLINDRE ET DISPOSITIF DE MONTAGE D'UN CLAPET DANS CE PISTON**
HAUPTZYLINDERKOLBEN UND VORRICHTUNG ZUR BEFESTIGUNG EINES RÜCKSCHLAGVENTILS DARIN
MASTER CYLINDER PISTON AND DEVICE FOR MOUNTING A CHECK VALVE THEREIN

(30) Priorité: 06.12.2000 FR 0015848
(43) Date de publication de la demande: 08.10.2003
(73) Titulaire: ROBERT BOSCH GMBH, 70442 Stuttgart (DE)
(72) Inventeur: PAGOT, Henri, F-93430 VILLETANEUSE (FR); HENNEBELLE, Jean-Claude, F-59151 HAMEL (FR); MANZO, Vincenzo, I-70027 BARI (IT)
(74) Mandataire: Hurwic, Aleksander Wiktor
(86) Numéro de dépôt international: PCT/FR2001/003807
(87) Numéro de publication internationale: WO 2002/046010

(56) Documents cités:
- DE-A- 4 241 786
- DE-U- 8 812 281
- DE-U- 9 421 291
- US-A- 5 473 896

## Description

L'invention concerne un piston d'un maître-cylindre d'un circuit de freinage, en particulier pour véhicule automobile-, ainsi qu'un dispositif de montage d'un clapet dans ce piston.

Dans un maître-cylindre, en particulier du type tandem, les pistons primaire et secondaire sont chacun équipés d'un clapet pour l'ouverture et la fermeture d'un passage de liquide sous pression formé dans le piston, en fonction des déplacements du piston dans le maître-cylindre.

Ce passage de liquide débouche axialement dans un logement formé à une extrémité du piston et dans lequel est reçu le clapet qui comprend une tige guidée dans le passage de liquide et une tête située à l'extérieur du passage et sollicitée par un ressort de rappel vers le débouché du passage de liquide pour obturer ce dernier de façon étanche.

Ce ressort de rappel est un "ressort de compression monté entre la tête du clapet et des moyens d'appui rapportés sur le piston.

On a déjà proposé de former ces moyens d'appui par une cage métallique fixée par encliquetage élastique à l'intérieur du logement du clapet. A cette fin, la cage comprend à sa périphérie des pattes élastiquement déformables orientées radialement vers l'extérieur et destinées à s'engager et à se bloquer dans une gorge annulaire de la paroi cylindrique du logement du clapet. Au montage, ces pattes sont élastiquement rapprochées de l'axe quand la cage est introduite dans le logement du clapet et elles frottent sur la paroi cylindrique du logement jusqu'à ce que la cage soit dans une position axiale à l'intérieur du logement où les pattes s'engagent par détente élastique dans la gorge annulaire précitée.

Les frottements des pattes de la cage qui est réalisée en acier, sur la paroi cylindrique du logement formé dans le piston qui est réalisé en aluminium ou en alliage léger, peuvent provoquer des rayures de la paroi cylindrique et l'arrachement de particules ou de copeaux métalliques qui sont susceptibles de se positionner sous la tête du clapet ou sur la lèvre supérieure d'une coupelle d'étanchéité ou d'être la cause de rayures lors du déplacement du piston et donc de provoquer des défauts d'étanchéité du maître-cylindre, ce qui est un inconvénient majeur qu'il importe de corriger.

De plus, la cage précitée ne doit pas gêner l'écoulement du liquide de frein et limiter le débit. Le document DE 8812281 U décrit un cage conventionel.

L'invention a notamment pour but d'apporter une solution simple, efficace et peu coûteuse à ce problème en évitant tout risque de rayures et de défauts d'étanchéité du maître-cylindre qui résulteraient du montage de la cage précitée sur le piston du maître-cylindre.

Elle propose, à cet effet, un piston de maître-cylindre, en particulier pour véhicule automobile, comprenant à une extrémité un logement sensiblement cylindrique de réception d'un clapet et d'un ressort de rappel monté entre le clapet et une cage rapportée sur le piston, caractérisé en ce que cette cage est fixée par sertissage à l'intérieur dudit logement.

Le sertissage est une déformation plastique d'une partie de la cage, qui peut être réalisée lorsque la cage est dans une position axiale voulue à l'intérieur du logement, sans risque d'arrachement de particules ou de copeaux métalliques susceptibles de provoquer des rayures et des défauts d'étanchéité du maître-cylindre

Selon une autre caractéristique de l'invention, le sertissage est réalisé par des moyens de retenue qui sont formés sur la cage et engagés par déformation plastique dans une gorge annulaire dudit logement.

Dans une première forme de réalisation de l'invention, les moyens de retenue de la cage comprennent un rebord sensiblement cylindrique qui s'étend autour de la cage en direction de l'extrémité ouverte du logement.

Dans une autre réalisation de l'invention, ces moyens de retenue comprennent des pattes qui s'étendent sensiblement parallèlement à l'axe de la cage autour de celle-ci en direction de l'extrémité ouverte du logement.

Avantageusement, ces pattes sont formées par des crevés ou par découpe d'une paroi sensiblement cylindrique ou tronconique de la cage.

De préférence, les moyens de retenue sont formés à une extrémité de la cage et sont raccordés à celle-ci par un rebord annulaire s'étendant radialement vers l'intérieur et comprenant des moyens d'application sur des moyens d'appui formés dans le logement du clapet.

Cela permet de placer automatiquement la cage dans sa position de sertissage dans le logement.

A son extrémité opposée auxdits moyens de retenue, la cage comprend un autre rebord annulaire qui est orienté radialement vers l'intérieur et qui forme des moyens d'appui du ressort de rappel du clapet.

La cage selon l'invention est avantageusement réalisée par emboutissage, de façon simple et économique.

L'invention propose également un dispositif de montage d'un clapet dans un piston d'un maître-cylindre, en particulier pour véhicule automobile, ce piston comprenant à une extrémité un logement sensiblement cylindrique de réception d'un clapet et d'un ressort de rappel monté entre le clapet et une cage rapportée sur le piston et fixée par des moyens de retenue engagés dans une gorge annulaire de la paroi cylindrique du logement, ce dispositif étant caractérisé en ce que :
- la cage a, dans un état libre initial, un diamètre extérieur inférieur au diamètre interne du logement,
- le logement comprend des moyens d'appui axial de la cage dans une position où ses moyens de retenue sont radialement alignés avec la gorge annulaire précitée,
- le dispositif de montage comprend des moyens de support et d'application de la cage sur les moyens d'appui du logement et des moyens de déformation radiale vers l'extérieur desdits moyens de retenue pour les engager dans la gorge annulaire du logement.

Avantageusement, les moyens de support et d'application de la cage sur les moyens d'appui du logement comprennent un poussoir central, monté dans un organe tubulaire dont une extrémité chanfreinée forme les moyens précités de déformation radiale.

De préférence, le poussoir central est guidé en coulissement axial dans l'organe tubulaire précité et est sollicité par un ressort de rappel dans une direction correspondant à l'application de la cage sur les moyens d'appui formés dans le logement.

Selon l'invention, il suffit d'aligner axialement le dispositif de montage et le piston du maître-cylindre, et de déplacer ensuite par translation axiale le dispositif de montage vers le piston, ou inversement, pour introduire la cage dans le logement du clapet, la positionner axialement dans ce logement avec ses moyens de retenue en alignement radial avec la gorge annulaire formée dans le logement pour les recevoir, et de déplacer encore le dispositif vers le piston pour déformer plastiquement les moyens de retenue de la cage et les engager radialement dans la gorge annulaire du logement.

Une translation axiale en sens inverse permet ensuite de séparer le piston du dispositif de montage, la cage étant retenue dans le logement du clapet.

L'invention sera mieux comprise et d'autres caractéristiques, avantages et détails de celle-ci apparaîtront plus clairement à la lecture de la description qui suit, faite à titre d'exemple en référence aux dessins annexés dans lesquels :
- la figure 1 est une représentation schématique en coupe axiale d'un piston de maître-cylindre selon l'invention ;
- la figure 2 est une vue schématique à plus grande échelle du détail encerclé II de la figure 1 ;
- la figure 3 est une vue schématique en coupe axiale d'un dispositif de montage selon l'invention ;
- la figure 4 est une vue schématique partielle en coupe axiale, à plus grande échelle, illustrant le montage de la cage dans le logement du clapet d'un piston selon l'invention :
- la figure 5 est une vue schématique en perspective d'une variante de réalisation de la cage;
- la figure 6 est une vue schématique en coupe axiale d'une autre variante de réalisation de la cage;
- les figures 7 et 8 sont des vues schématiques en perspective d'une autre variante de réalisation de la cage.

Dans les dessins, par convention, la direction vers l'avant est indiquée par la flèche AV et la direction vers l'arrière par la flèche AR.

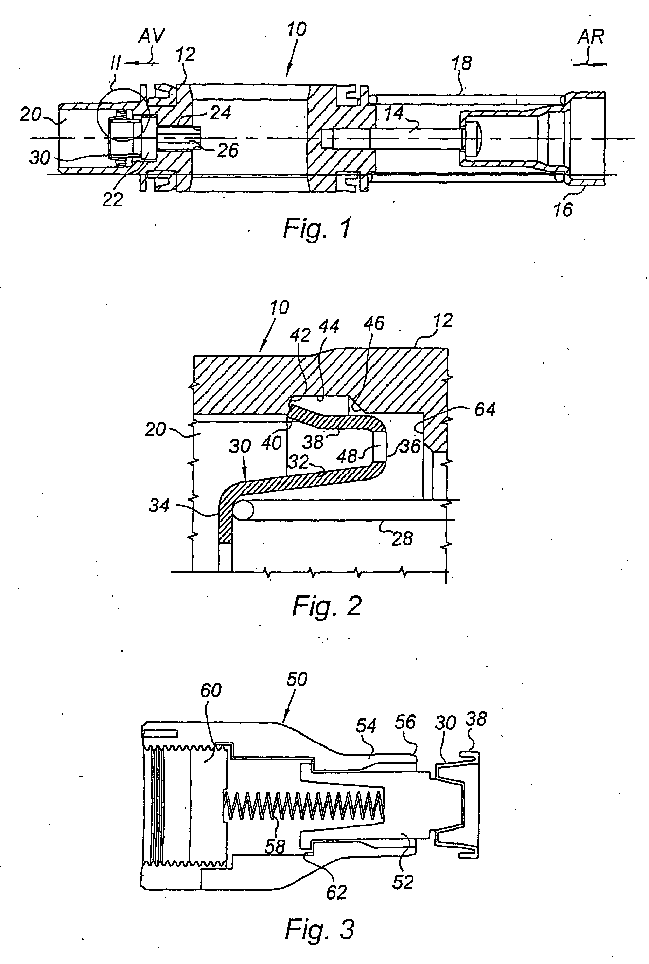

En figure 1, on a représenté schématiquement un exemple de réalisation d'un piston secondaire 10 d'un maître-cylindre tandem d'un circuit de freinage pour véhicule automobile, le piston 10 comprenant un corps 12 relié par une vis de réglage 14 à une butée de ressort 16 sollicitée par un ressort 18 monté entre la butée 16 et une extrémité du corps 12 du piston secondaire, cette butée de ressort 16 étant destinée à coopérer avec un piston primaire (non représenté) du maître-cylindre.

Du côté opposé à la butée de ressort 16, le piston secondaire comprend une extrémité axiale tubulaire 20 formant un logement sensiblement cylindrique de réception d'un clapet 22 d'ouverture et de fermeture d'un passage axial 24 formé dans une paroi transversale du corps 12. Le clapet 22 comprend une tige axiale 26 engagée dans le passage 24 et est associé à un ressort de rappel 28 monté entre la tête du clapet 22 et une cage 30 rapportée à l'intérieur du logement 20.

Dans la position représentée en figure 1, la tête du clapet 22 est poussée élastiquement par le ressort de rappel 28 en appui sur le débouché du passage 24 dans le logement 20 et obture ce passage de façon étanche.

La cage 30 est une pièce métallique, par exemple en acier, réalisée par emboutissage et comprend une paroi tronconique 32 allant en s'élargissant vers l'arrière et dont l'extrémité avant est raccordée à un rebord annulaire 34 s'étendant radialement vers' l'intérieur, l'extrémité arrière de la paroi tronconique 32 étant raccordée à un rebord annulaire 36 s'étendant radialement vers l'extérieur et raccordé lui-même à un rebord cylindrique 38 qui s'étend vers l'avant, autour et à distance de la paroi tronconique 32.

Dans la position de sertissage de la cage 30 représentée aux figures 1 et 2, l'extrémité avant 40 du rebord cylindrique 38 est déformée radialement vers l'extérieur et s'étend en oblique pour venir en butée sur le bord avant 42 d'une gorge annulaire 44 formée dans la surface interne de la paroi du logement 20, cette gorge ayant un bord arrière 46 qui s'étend en oblique vers l'arrière. Le diamètre interne de la paroi cylindrique du logement 20 est légèrement supérieur au diamètre externe du rebord cylindrique 38 à l'état libre non contraint. Dans cette position, la cage 30 est déplaçable axialement dans le logement 20 sur une distance qui correspond au jeu axial de l'extrémité 40 du rebord 38 dans la gorge 44, ce qui permet de dégager du fond du logement 20 des orifices 48 formés à intervalles réguliers dans le rebord annulaire 36 pour faciliter l'écoulement du liquide sous pression par le passage 24 quand le clapet 22 est en position d'ouverture, ce liquide sous pression passant également par l'orifice central délimité par le rebord annulaire 34 de la cage 30.

Un exemple de réalisation du dispositif de montage de la cage 30 est représenté schématiquement en figure 3.

Ce dispositif 50 comprend un poussoir central 52 qui est monté coulissant à l'intérieur d'un organe tubulaire 54 dont l'extrémité arrière 56 est chanfreinée extérieurement et constitue les moyens de déformation plastique de l'extrémité 40 du rebord cylindrique 38 de la cage 30.

Un ressort de compression 58 est monté à l'intérieur de l'organe tubulaire 54, entre le poussoir 52 et une butée avant 60 réglable axialement en position par vissage à l'intérieur de l'organe tubulaire 54, le poussoir 52 étant ainsi sollicité en permanence vers l'arrière par le ressort 58 et étant amené en butée sur un épaulement interne 62 de l'organe tubulaire 54. L'extrémité arrière du poussoir 52 comprend des moyens de support de la cage 30,

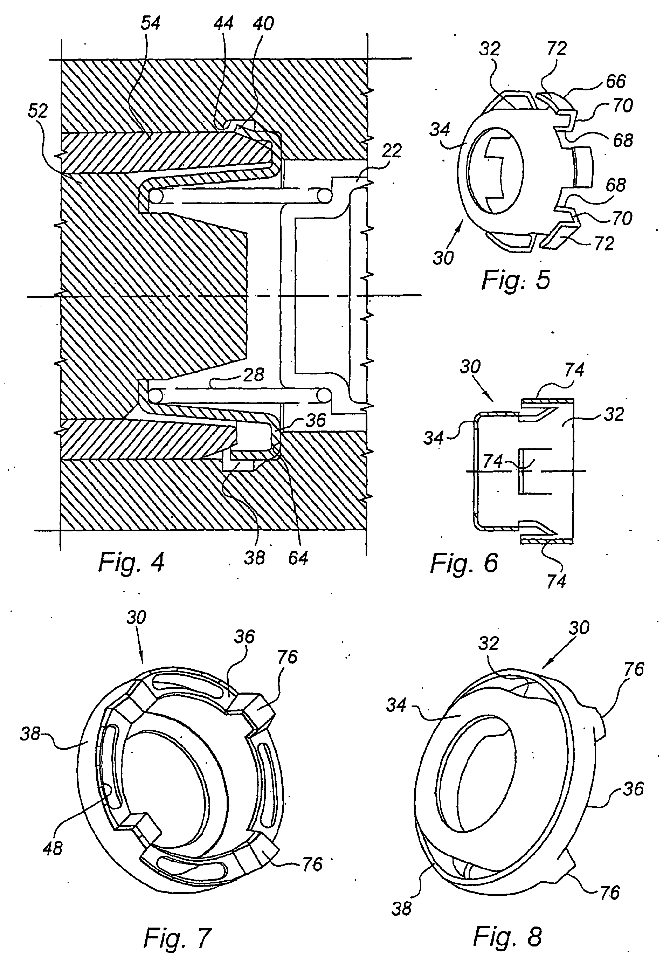

Le fonctionnement de ce dispositif de montage est illustré à la figure 4, dont la partie inférieure représente la cage 30 avant son sertissage et la partie supérieure la cage 30 en cours de sertissage.

Initialement, le clapet 22 est engagé par sa tige 26 dans le passage 24 et le ressort 28 est engagé sur la tête du clapet 22.

Le dispositif de montage de la figure 3 est aligné axialement avec le piston secondaire 10 pour présenter la cage 30 portée par l'extrémité du poussoir 52 en regard de l'extrémité ouverte du logement 20 à l'extrémité avant du piston 10. Ensuite, le dispositif est déplacé en translation axiale jusque dans la position représentée en partie inférieure de la figure 4, où le ressort 28 est comprimé entre la tête du clapet 22 et le rebord annulaire 34 de la cage 30, celle-ci étant en appui par son rebord annulaire 36 sur un épaulement interne 64 du logement 20. Dans cette position, l'extrémité avant du rebord cylindrique 38 de la cage 30 est sensiblement au niveau de la partie médiane de la gorge annulaire 44 du logement 20.

On continue de déplacer en translation axiale l'organe tubulaire 54 du dispositif de montage vers l'arrière pour que son extrémité chanfreinée 56 s'introduise à l'intérieur du rebord cylindrique 38, déforme radialement vers l'extérieur l'extrémité 40. de ce rebord à l'intérieur de la gorge annulaire 44, et vienne en butée axiale sur le rebord annulaire 36 de la cage 30, qui est lui-même en butée sur 1 'épaulement ' interne 64 du logement 20, comme représenté dans la moitié supérieure de la figure 4.

Dans cette position, la déformation vers l'extérieur de l'extrémité 40 du rebord cylindrique 38 de la cage est permanente. Cette déformation est de préférence réalisée sans que l'extrémité 40 du rebord 38 vienne en appui sur le fond de la gorge 44.

Ensuite, on déplace en translation axiale vers l'avant le dispositif de montage 50 pour le sortir du logement 20. Sous l'effet de la force développée par le ressort 28, la cage 30 suit ce mouvement vers l'avant jusqu'à ce que l'extrémité 40 de son rebord cylindrique 38 vienne en appui sur le bord avant de la gorge annulaire 44 dans la position représentée en figure 2. Dans cette position, le clapet 22 est maintenu en position d'obturation étanche du passage 24 et peut être déplacé en translation vers l'avant en comprimant le ressort 28 pour l'ouverture de ce passage.

La déformation radiale vers l'extérieur de l'extrémité 46 du rebord 38 de la cage 30 n'implique aucun frottement d'une partie de cette cage sur le piston 10, lorsque le dispositif de montage 50 est guidé correctement par rapport au piston 10, ce qui ne pose pas de problème particulier. De plus, le fonctionnement de ce dispositif de montage est facilement automatisable.

Dans la variante de réalisation représentée schématiquement en figure 5, la cage 30 comprend une paroi cylindrique ou tronconique 32 dont l'extrémité arrière est formée avec des pattes 66 en U dont une première partie 68 s'étend axialement vers l'arrière, dans le prolongement de la paroi 32, dont une partie intermédiaire 70 est pliée radialement vers l'extérieur et remplit la fonction du rebord annulaire 36 du mode de réalisation de la figure 2 et dont une troisième partie 12 s'étend axialement vers l'avant et remplit la fonction du rebord cylindrique 38 du mode de réalisation de la figure 2. A son extrémité avant, la paroi 32 est raccordée à un rebord annulaire 34 comme dans le mode de réalisation précédent.

Dans la variante de la figure 6, la cage 30 comprend une paroi 32 qui est tronconique au moins dans sa partie arrière et qui peut être cylindrique dans sa partie avant, et des pattes 74 qui sont formées par des crevés de la partie arrière de la paroi 32, ces pattes 74 s'étendant vers l'avant sensiblement parallèlement à l'axe de la cage depuis l'extrémité arrière de celle-ci et sur une longueur correspondant à celle du rebord cylindrique 38 du mode de réalisation de la figure 2. A son extrémité avant, la cage comporte un rebord annulaire 34 orienté radialement vers l'intérieur, comme dans les modes de réalisation précédents.

La variante de réalisation de la cage représentée aux figures 7 et 8 correspond pour l'essentiel au mode de réalisation de la figure 2 et comprend une paroi tronconique 32 qui s'étend entre un rebord annulaire avant 34 et un rebord annulaire arrière 36 comportant des orifices 48 et raccordé à un rebord cylindrique 38, le rebord annulaire arrière 36 comprenant de plus des plots en saillie 76 s'étendant axialement vers l'arrière et qui forment lès moyens de butée de la cage 30 sur l'épaulement interne 64 du logement 20.

Pour tous ces-modes de réalisation, la fixation de la cage 30 à l'intérieur du logement 20 est réalisée de la façon précitée, en évitant tout contact avec la paroi interne du logement 20 et les bords et le fond de la gorge annulaire 44 pour éviter tout risque d'arrachement de particules ou de copeaux métalliques.

On notera également que, dans les réalisations des figures 5 à 8, il n'est pas nécessaire que la cage 30 soit déplaçable axialement dans le logement pour dégager du fond de ce logement des orifices facilitant l'écoulement du liquide sous pression par le passage 24.

## Revendications

1. - Piston de maître-cylindre, en particulier pour véhicule automobile, comprenant à une extrémité un logement cylindrique (20) de réception d'un clapet (22) et d'un ressort de rappel (28) monté entre le clapet et une cage (30) rapportée sur le piston, **caractérisé en ce que** la cage (30) est fixée par sertissage par déformation plastique de moyens de retenue (38, 72, 74) formés sur la cage à l'intérieur du logement (20).

2. - Piston selon la revendication 1, **caractérisé en ce que** le sertissage est réalisé par déformation plastique des éléments de retenue (38, 72, 74) dans une gorge annulaire (44) dudit logement.

3. - Piston selon la revendication 1 ou 2, **caractérisé en ce que** la cage (30) est déplaçable dans le logement sur une distance correspondant au jeu axial de ses moyens de retenue dans la gorge annulaire (44)

4. - Piston selon la revendication 1, 2 ou 3, **caractérisé en ce que** les moyens de retenue comprennent un rebord sensiblement cylindrique (38) qui s'étend autour de la cage en direction de l'extrémité ouverte du logement (20).

5. - Piston selon la revendication. 1, 2 ou 3, **caractérisé en ce que** les moyens de retenue comprennent des pattes (72, 74) qui s'étendent sensiblement parallèlement à l'axe de la cage autour de celle-ci, en direction de l'extrémité ouverte du logement (20).

6. - Piston selon la revendication 5, **caractérisé en ce que** lesdites pattes (72,74) sont formées par découpe ou par des crevés d'une paroi (32) sensiblement cylindrique ou tronconique de la cage.

7. - Piston selon l'une des revendications précédentes, **caractérisé en ce que** là cage (30) comprend, du côté du clapet (22), des moyens (36, 76) d'appui sur un épaulement interne (64) du logement.

8. - Piston selon l'une des revendications précédentes, **caractérisé en ce que** l'extrémité de la cage située du côté de l'extrémité ouverte du logement (20) comprend un rebord annulaire (34) s'étendant radialement vers l'intérieur et formant des moyens d'appui du ressort de rappel (28) du clapet.

9. - Piston selon l'une des revendications précédentes, **caractérisé en ce que** ladite cage est réalisée par emboutissage.

10. - Dispositif de montage d'un clapet dans un piston d'un maître-cylindre, en particulier pour véhicule automobile, ce piston (10) comprenant à une extrémité un logement (20) sensiblement cylindrique de réception d'un clapet (22) et d'un ressort de rappel (28) monté entre le clapet et une cage (30) rapportée sur le piston et fixée par des moyens de retenue engagés dans une gorge annulaire (44) de la paroi cylindrique du logement (20), **caractérisé en ce que** :
- ladite cage (30) a, dans un état libre initial, un diamètre extérieur inférieur au diamètre interne du logement (20),
- le logement (20) comprend des moyens (64) d'appui axial de la cage (30) dans une position où ses moyens de retenue (38, 72, 74) sont radialement alignés avec la gorge annulaire (44) précitée,
- le dispositif de montage comprend des moyens (52) de support et d'application de la cage (30) sur les moyens (64) d'appui du logement et des moyens (54) de déformation radiale vers l'extérieur des moyens de retenue de ladite cage pour engager ces derniers dans la gorge annulaire (44) du logement.

11. - Dispositif selon la revendication 10, **caractérisé en ce que** les moyens d'application de la cage (30) sur les moyens d'appui (64) du logement comprennent un poussoir central (52), monté dans un organe tubulaire (54) dont une extrémité chanfreinée (56) forme les moyens de déformation radiale précités.

12. - Dispositif selon la revendication 11, **caractérisé en ce que** le poussoir central (52) est guidé en coulissement axial dans l'organe tubulaire (54) et est sollicité par un ressort de rappel (58) dans une direction correspondant à l'application de la cage (30) sur les moyens d'appui (64) du logement.

## Claims

1. Master cylinder piston, more particularly for a motor vehicle, comprising at one end a substantially cylindrical housing (20) accommodating a flap (22) and a return spring (28) arranged between the flap and a cage (30), added to the piston, **characterised in that** said cage (30) is crimped by a plastic deformation of the retaining means (38, 72, 74) formed on the cage inside the housing (20).

2. Piston according to claim 1, **characterised in that** the crimping process is carried out by plastic deformation of the retaining means (38, 72, 74) in an annular groove (44) of said housing.

3. Piston according to claim 1 or 2, **characterised in that** the cage (30) is movable inside the housing, on a distance corresponding to the axial play of its retaining means within the annular groove (44).

4. Piston according to claim 1, 2 or 3, **characterised in that** the retaining means comprise a substantially cylindrical flange (38) extending round the cage in the direction of the open end of the housing (20).

5. Piston according to claim 1, 2 or 3, **characterised in that** the retaining means comprise lugs (72, 74), extending substantially parallel to the axis of the cage around the latter in the direction of the open end of the housing (20).

6. Piston according to claim 5, **characterised in that** said lugs (72, 74) are formed either by partial cuts or cutouts made in a substantially cylindrical or truncated-cone shaped wall (32) of the cage.

7. Piston according to any one of the preceding claims, **characterised in that** the cage (30) comprises, on the side of the flap (22), bearing means (36, 76) intended to rest on an inner shoulder (64) of the housing.

8. Piston according to any one of the preceding claims, **characterised in that** the end of the cage, on the open end side of the housing (20), comprises an annular flange (34) directed radially inwards and constituting bearing means for the return spring (28) of the flap.

9. Piston according to any one of the preceding claims, **characterised in that** said cage is manufactured using a stamping process.

10. Jig for the fitting of a flap into a master cylinder piston, more particularly for a motor vehicle, said piston (10) comprising, at one end, a substantially cylindrical housing (20) accommodating a flap (22) and a return spring (28) arranged between the flap and a cage (30), added to the piston and fastened using retaining means received within an annular groove (44) made in the cylindrical wall of the housing (20), **characterised in that** :
- in an initial free state, said cage (30) has an outer diameter which is smaller that the inner diameter of the housing (20) ;
- the housing (20) includes means (64) for the axial support of the cage (30) in a position in which its retaining means (38, 72, 74) are radially in line with said annular groove (44) ;
- the jig comprises means (52) for the support and application of the cage (30) onto the supporting means (64) of the housing, and means (54) for a radially-outward deformation of said retaining means of said cage, so as to introduce them into the annular groove (44) provided in the housing.

11. Jig according to claim 10, **characterised in that** the means for the application of the cage (30) onto the supporting means (64) of the housing comprise a central push rod (52), fitted inside a tubular member (54), a bevelled end (56) of which constitutes said radial-deformation means.

12. Jig according to claim 11, **characterised in that** the central push rod (52) is guided for an axial sliding motion within said tubular member (54), and biased by a return spring (58) in a direction which corresponds to the applying of the cage (30) onto the supporting means (64), formed in the housing.

## Patentansprüche

1. Hauptzylinderkolben, insbesondere für ein Kraftfahrzeug, der an einem Ende eine zylindrischen Aufnahme (20) zum Aufnehmen eines Ventilelements (22) und einer Rückstellfeder (28) aufweist, welche zwischen dem Ventilelement und einem an den Kolben angesetzten Halter (30) angeordnet ist, **dadurch gekennzeichnet, dass** der Halter (30) durch Verstemmen befestigt ist, indem am Halter ausgebildete Haltemittel (38, 72, 74) in der Aufnahme (20) plastisch verformt werden.

2. Kolben nach Anspruch 1, **dadurch gekennzeichnet, dass** das Verstemmen durch plastische Verformung der Haltemittel (38, 72, 74) in einer ringförmigen Nut (44) der Aufnahme durchgeführt wird.

3. Kolben nach Anspruch 1 oder 2, **dadurch gekennzeichnet, dass** der Halter (30) in der Aufnahme über eine Entfernung verschiebbar ist, die dem axialen Spiel seiner Haltemittel in der ringförmigen Nut (44) entspricht.

4. Kolben nach Anspruch 1, 2 oder 3, **dadurch gekennzeichnet, dass** die Haltemittel einen im Wesentlichen zylindrischen Rand (38) umfassen, der sich um den Halter zum offenen Ende der Aufnahme (20) hin erstreckt.

5. Kolben nach Anspruch 1, 2 oder 3, **dadurch gekennzeichnet, dass** die Haltemittel Laschen (72, 74) umfassen, die sich im Wesentlichen parallel zur Achse des Halters um diesen herum und zum offenen Ende der Aufnahme (20) hin erstrecken.

6. Kolben nach Anspruch 5, **dadurch gekennzeichnet, dass** die Laschen (72, 74) durch Ausstanzen oder durch Einschnitte einer im Wesentlichen zylindrischen oder kegelstumpfartigen Wand (32) des Halters gebildet sind.

7. Kolben nach einem der vorhergehenden Ansprüche, **dadurch gekennzeichnet, dass** der Halter (30) auf der Seite des Ventilelements (22) Mittel (36, 76) zur Abstützung an einem Innenabsatz (64) der Aufnahme aufweist.

8. Kolben nach einem der vorhergehenden Ansprüche, **dadurch gekennzeichnet, dass** das Ende des Halters, das sich auf der Seite des offenen Endes der Aufnahme (20) befindet, einen ringförmigen Rand (34) aufweist, der sich radial nach innen erstreckt und Mittel zur Abstützung der Feder (28) zum Zurückstellen des Ventilelements bildet.

9. Kolben nach einem der vorhergehenden Ansprüche, **dadurch gekennzeichnet, dass** der Halter durch Tiefziehen gebildet ist.

10. Vorrichtung zum Anbringen eines Ventilelements in einem Kolben eines Hauptzylinders, insbesondere für ein Kraftfahrzeug, wobei dieser Kolben (10) an einem Ende eine im Wesentlichen zylindrische Aufnahme (20) zum Aufnehmen eines Ventilelements (22) und einer Rückstellfeder (28) aufweist, welche zwischen dem Ventilelement und einem Halter (30) angebracht ist, der an den Kolben angesetzt und über Haltemittel befestigt ist, die in eine ringförmige Nut (44) der zylindrischen Wand der Aufnahme (20) eingreifen, **dadurch gekennzeichnet, dass**:
- der Halter (30) in einem freien Ausgangszustand einen Außendurchmesser besitzt, der kleiner ist als der Innendurchmesser der Aufnahme (20),
- die Aufnahme (20) Mittel (64) für die axiale Abstützung des Halters (30) in einer Stellung aufweist, in welcher seine Haltemittel (38, 72, 74) radial auf die vorgenannte ringförmige Nut (44) ausgerichtet sind,
- die Montagevorrichtung Mittel (52) zum Tragen und Anlegen des Halters (30) an die Stützmittel (64) der Aufnahme und Mittel (54) zur radialen Verformung der Haltemittel des Halters nach außen aufweist, damit diese in die ringförmige Nut (44) der Aufnahme eingreifen.

11. Vorrichtung nach Anspruch 10, **dadurch gekennzeichnet, dass** die Mittel zum Anlegen des Halters (30) an die Stützmittel (64) der Aufnahme eine mittlere Drückeinrichtung (52) aufweisen, die in einem rohrförmigen Element (54) angebracht ist, bei dem ein abgeschrägtes Ende (56) die vorgenannten Mittel zur radialen Verformung bildet.

12. Vorrichtung nach Anspruch 11, **dadurch gekennzeichnet, dass** die mittlere Drückeinrichtung (52) im rohrförmigen Element (54) in eine axiale Gleitbewegung geführt und durch eine Rückstellfeder (58) in eine Richtung beaufschlagt ist, die dem Anlegen des Halters (30) an die Stützmittel (64) der Aufnahme entspricht.
